# EUROPÄISCHE PATENTSCHRIFT

(11) **EP 0 861 752 B1**
(45) Veröffentlichungstag und Bekanntmachung des Hinweises auf die Patenterteilung: **10.10.2001**
(21) Anmeldenummer: 98890008.0
(22) Anmeldetag: 13.01.1998
(51) Int. Cl.: B60M 1/28

(54) **Maschine zum Verlegen eines Fahrdrahtes einer Oberleitung**
Installation machine for a catenery line
Machine d'installation d'une ligne caténaire

(30) Priorität: 17.02.1997 AT 25697
(43) Veröffentlichungstag der Anmeldung: 02.09.1998
(73) Patentinhaber: Franz Plasser Bahnbaumaschinen- Industriegesellschaft m.b.H., 1010 Wien (AT)
(72) Erfinder: Theurer, Josef, 1010 Wien (AT); Gruber,Leopold Rudolf, 3270 Scheibbs (AT)

(56) Entgegenhaltungen:
- DE-A- 2 211 247
- US-A- 5 114 119

## Beschreibung

Die Erfindung betrifft eine gleisverfahrbare Maschine zum Verlegen eines Fahrdrahtes und/oder eines Tragseiles einer Oberleitung eines Gleises, mit einem auf Schienenfahrwerken abgestützten Maschinenrahmen, einer Fahrdraht bzw. Tragseil beinhaltenden Speichertrommel, einer wenigstens eine - um eine Rotationsachse drehbar gelagerte - Seilrolle mit einer Seilrille zur Abwicklung und Aufbringung einer Zugspannung aufweisenden Zugspannungsvorrichtung, und mit einer eine Umlenkrolle mit einer Seilrille aufweisenden, durch Antriebe höhen- und seitenverstellbaren Führungseinrichtung.

Gemäß US 5,114,119 ist bereits eine derartige Maschine bekannt, mit der ein Fahrdraht und ein Tragseil einer Gleisoberleitung gemeinsam und mit der endgültigen Zugspannung verlegt werden können. Fahrdraht und Tragseil werden dabei kontinuierlich von jeweils einer eigenen Speichertrommel abgezogen und durchlaufen eine Zugspannungsvorrichtung, bevor sie anhand einer Führungseinrichtung in der korrekten Höhen- und Seitenlage für die Endmontage positioniert werden. Die Zugspannungsvorrichtung besteht im wesentlichen aus zwei Seilrollen mit Seilrillen und quer zur Maschinenlängsrichtung verlaufenden, horizontalen Rotationsachsen, wobei die Seilrollen in Maschinenlängsrichtung unmittelbar hintereinander auf einem wippenartig aufgehängten Tragrahmen angeordnet und über einen Kettenantrieb miteinander verbunden sind. Die Verlegespannung entsteht durch die Vorfahrt der Maschine bei hydraulisch abgebremsten Seilrollen und wird - auch bei Stillstand der Maschine - automatisch auf einen gewünschten Wert gehalten. Der von der Speichertrommel abgewickelte Draht umläuft dabei die beiden Seilrollen der Zugspannungsvorrichtung in einer Doppelschleife, wobei beide Seilrollen jeweils zwei nebeneinanderliegende Seilrillen aufweisen.

Eine weitere, durch DE 22 11 247 C3 geoffenbarte Maschine zum Installieren einer Oberleitung weist eine auf einem gleisverfahrbaren Maschinenrahmen montierte Hebebühne auf, auf der sich die Zugspannungsvorrichtung und Führungseinrichtung befinden, während die Speichertrommeln direkt auf dem Maschinenrahmen montiert sind. Die Zugspannungsvorrichtung weist eine Anzahl von aneinander anpreßbaren, angetriebenen Rollen mit horizontalen Drehachsen auf, zwischen denen der Draht während des Abziehens eingeklemmt wird.

Gemäß US 4,213,596 ist es auch bekannt, bei einer Maschine zum Verlegen einer Oberleitung eine Zugspannungsvorrichtung direkt an der Speichertrommel anzuordnen. Die Zugspannungsvorrichtung besteht dabei aus einer Bremsscheibe, die mit der Nabe der in einer Abstützung auf dem Maschinenrahmen gelagerten Speichertrommel drehfest verbunden ist und auf die eine hydraulisch betätigbare Bremseinrichtung wirkt. Der Draht wird durch die Vorfahrt der Maschine abgezogen, wobei durch die Bremseinrichtung die erforderliche Zugspannung erzeugt wird.

Die Aufgabe der Erfindung besteht nun in der Schaffung einer Maschine der eingangs beschriebenen Art, mit der unter geringem konstruktiven Aufwand und vereinfachter Handhabung eine qualitative Verbesserung der verlegten Oberleitung erzielbar ist.

Diese Aufgabe wird mit einer gattungsgemäßen Maschine dadurch gelöst, daß jede Seilrolle der Zugspannungsvorrichtung eine einzige kreisförmige Seilrille aufweist, und daß beim Abwickelvorgang sämtliche Seilrillen der Zugspannungsvorrichtung und der Führungseinrichtung in einer gemeinsamen, senkrecht zur Rotationsachse verlaufenden Abwickelebene positioniert sind.

Eine derartige Ausbildung der Seilrollen in Kombination mit der speziellen Anordnung aller Seilrillen in einer einzigen Abwickelebene ermöglicht es, jegliche nachteilige Verwindung des Fahrdrahtes bezüglich dessen Längsachse im Verlauf des gesamten Abwickelvorganges zuverlässig zu vermeiden, da der Draht nun in vorteilhafter Weise präzise in einer einzigen Abwickelebene gehalten werden kann. Jegliche Krümmung und darauffolgende Entkrümmung des Fahrdrahtes erfolgt ausschließlich in dieser Ebene. Eine seitliche Verbiegung und daraus resultierende Verwindung des Fahrdrahtes um seine Längsachse ist dabei ausgeschlossen, womit gewährleistet ist, daß der Fahrdraht nach seiner Installation über seine ganze Länge lagegenau die gewünschte Position einnimmt und die untere Kontaktfläche des Fahrdrahtes exakt parallel zur Gleisebene verläuft. Dies erleichtert nicht nur wesentlich die Montage der Hänger, sondern bietet darüberhinaus den großen Vorteil, daß dadurch der optimale Kontakt des Stromabnehmers mit der verlegten Oberleitung unter größtmöglicher Verminderung des Verschleißes und damit einhergehender Erhöhung der Wirtschaftlichkeit zuverlässig gewährleistet ist.

Die Weiterbildung gemäß Anspruch 2 ermöglicht - trotz des Vorhandenseins von nur einer einzigen Seilrille pro Seilrolle - eine Reibung zwischen Fahrdraht und Rille in erforderlichem Ausmaß, um die gewünschte Zugspannung auf den Draht aufzubringen. Durch die Anordnung der Speichertrommel zwischen den beiden Seilrollen und die dadurch bedingte Bahn des abgewickelten Drahtes ist der volle Kontakt des Fahrdrahtes mit jeder Seilrolle über etwa die Hälfte deren Umfanges sichergestellt und damit ein Durchrutschen des Fahrdrahtes weitestgehend ausgeschlossen.

Zusätzliche erfindungsgemäße Vorteile ergeben sich aus den Unteransprüchen und der Beschreibung.

Die Erfindung wird im folgenden anhand in der Zeichnung dargestellter Ausführungsbeispiele näher erläutert.

Es zeigen:
Fig. 1 eine Seitenansicht und Fig. 2 eine Draufsicht auf eine erfindungsgemäß ausgebildete Maschine zum Verlegen einer Oberleitung,
Fig. 3 eine Detailansicht einer speziellen Ausbildung einer Seilrolle, und
Fig. 4 eine schematische Darstellung einer weiteren Variante der Erfindung.

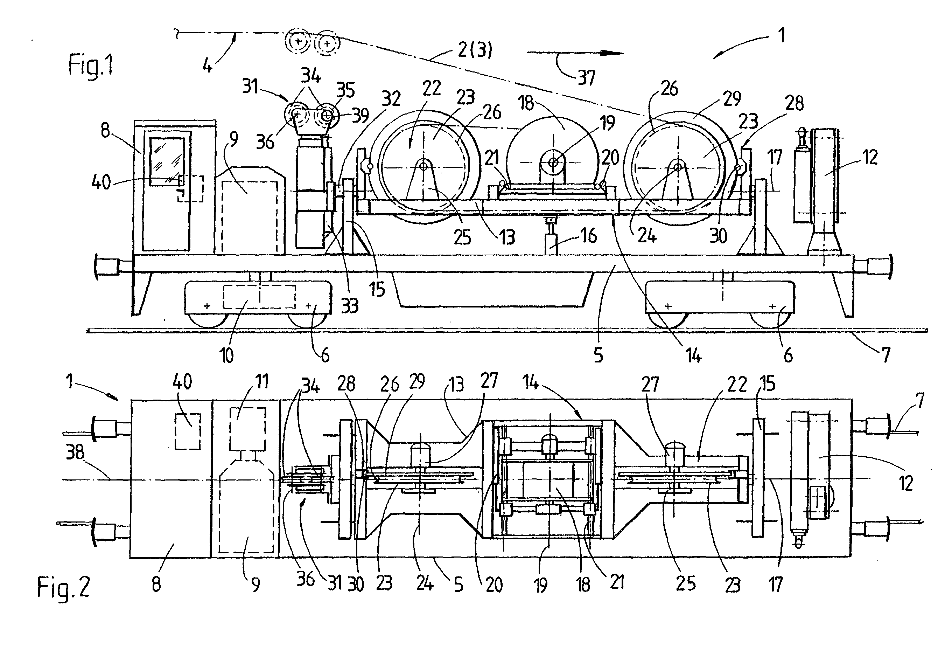

Die in Fig. 1 und 2 ersichtliche Maschine 1 zum Verlegen eines Fahrdrahtes 2 oder eines Tragseiles 3 einer Oberleitung 4 weist einen Maschinenrahmen 5 auf, der anhand von Schienenfahrwerken 6 auf einem Gleis 7 verfahrbar ist. Ein neben einer endseitigen Fahr- bzw. Arbeitskabine 8 auf dem Maschinenrahmen 5 angeordneter Motor 9 dient zur Energieversorgung eines Fahrantriebes 10 sowie eines Hydraulikaggregates 11. Dieses ist zur Beaufschlagung aller weiteren - noch zu beschreibenden - Antriebe der Maschine 1 sowie eines am gegenüberliegenden Ende des Maschinenrahmens 5 positionierten Kranes 12 vorgesehen.

Eine als langgestreckter Tragrahmen 13 ausgebildete Wippe 14 ist über zwei in Maschinenlängsrichtung voneinander distanzierte Stützen 15 am Maschinenrahmen 5 gelagert und anhand eines Antriebes 16 um eine in Maschinenlängsrichtung und horizontal verlaufende Schwenkachse 17 verschwenkbar. Eine den Fahrdraht 2 bzw. das Tragseil 3 beinhaltende, um eine Achse 19 drehbare Speichertrommel 18 ist in Längsmitte der Wippe 14 auf dieser angeordnet und durch Antriebe 20 in Längsrichtung der - senkrecht zur Maschinenlängsrichtung verlaufenden - Achse 19 in einer Querführung 21 verschiebbar ausgebildet. Eine ebenfalls auf der Wippe 14 montierte Zugspannungsvorrichtung 22 weist zwei Seilrollen 23 auf, die in Maschinenlängsrichtung voneinander distanziert zu beiden Seiten der Speichertrommel 18 angeordnet und jeweils um eine zur Achse 19 parallele Rotationsachse 24 drehbar über Lagerböcke 25 mit dem Tragrahmen 13 verbunden sind.

Jede Seilrolle 23 der Zugspannungsvorrichtung 22 weist eine einzige, kreisförmige - in einer senkrecht zur Rotationsachse 24 verlaufenden Ebene befindliche - Seilrille 26 auf, in die der Fahrdraht 2 bzw. das Tragseil 3 zur Abwicklung von der Speichertrommel 18 eingelegt wird. Zur Aufbringung einer Zugspannung auf den Fahrdraht ist den Seilrollen 23 jeweils ein als Bremse wirksamer, koaxial zur Rotationsachse 24 angeordneter Hydraulikmotor 27 zugeordnet. Weiters ist jede Seilrolle 23 der Zugspannungsvorrichtung 22 mit einer zusätzlichen Bremseinrichtung 28 in Form einer Scheibenbremse ausgestattet, die aus einer Bremsscheibe 29 und auf diese wirksamen, hydraulisch betätigbaren Bremsbacken 30 besteht.

Eine Führungseinrichtung 31 zur Führung des zu verlegenden Fahrdrahtes 2 bzw. Tragseiles 3 ist in Arbeitsrichtung (Pfeil 37) der Maschine 1 unmittelbar an die hintere Seilrolle 23 der Zugspannungsvorrichtung 22 anschließend angeordnet und über eine Welle 32 auf der Wippe 14 befestigt und somit zusammen mit dieser um die Schwenkachse 17 verschwenkbar. Die Führungseinrichtung 31 ist anhand eines Antriebes 33 in vertikaler Richtung teleskopisch längenveränderbar und weist an ihrem oberen Ende zwei Umlenkrollen 34 mit je einer Seilrille 35 auf. Die beiden gleich großen Umlenkrollen 34 sind in Maschinenlängsrichtung unmittelbar hintereinander angeordnet und weisen Drehachsen 36 auf, die parallel zu den Rotationsachsen 24 und zur Achse 19 verlaufen. Dabei ist die Drehachse 36 der in Arbeitsrichtung der Maschine 1 vorderen, der Zugspannungsvorrichtung 22 nähergelegenen Umlenkrolle 34 in vertikaler Richtung tiefer als die Drehachse der anderen Umlenkrolle angeordnet.

Sämtliche Seilrillen 26,35 der Zugspannungsvorrichtung 22 sowie der Führungseinrichtung 31 sind in einer gemeinsamen Abwickelebene 38 (Fig. 2) positioniert, die senkrecht zu den Rotationsachsen 24 der Seilrollen 23 bzw. parallel zur Maschinenlängsrichtung verläuft, wobei die Schwenkachse 17 der Wippe 14 ebenfalls in der Abwickelebene 38 verlaufend angeordnet ist.

Beim Abwickelvorgang wird die - anhand des Kranes 12 auf die Wippe 14 geladene - Speichertrommel 18 mittels der Antriebe 20 in der Querführung 21 soweit querverschoben, bis das freie Ende des abzuziehenden Drahtes in der Abwickelebene 38 liegt. Unter Zuhilfenahme eines (nicht dargestellten) Hilfsseiles wird der Draht nun in die Seilrillen 26 der beiden Seilrollen 23 eingefädelt, und zwar von der Speichertrommel 18 zuerst auf die in Arbeitsrichtung 37 hintere und von dieser unterhalb der Speichertrommel 18 vorbei auf die vordere Seilrolle 23. Der Draht liegt dabei auf jeder der beiden Seilrollen 23 über ca. die Hälfte deren Umfanges auf. Von der vorderen Seilrolle 23 wird der Draht zu den Umlenkrollen 34 der Führungseinrichtung 31 bzw. in deren Seilrillen 35 gelegt. Nun kann der Fahrdraht 2 bzw. das Tragseil 3 anhand der Antriebe 33 und 16 durch die Führungseinrichtung 31 wunschgemäß höhen- und seitenverstellt werden, um den erforderlichen Zick-Zack-Verlauf der Oberleitung zu deren Endmontage herzustellen.

Der während des gesamten Abwickelvorganges in der Abwickelebene 38 befindliche Draht wird mittels der Zugspannungsvorrichtung 22 dabei präzise unter der vorgeschriebenen bzw. endgültigen Zugspannung gehalten, die anhand einer Zugkraftmeßeinrichtung 39 überwacht wird. Sobald diese einen plötzlichen Abfall der gewünschten Zugkraft für die Seilabwicklung - ausgelöst beispielsweise durch den Ausfall eines Hydraulikmotors 27 - registriert, gibt die Zugkraftmeßeinrichtung 39 ein entsprechendes Steuersignal über eine Steuereinrichtung 40 an die Bremseinrichtung 28 ab.

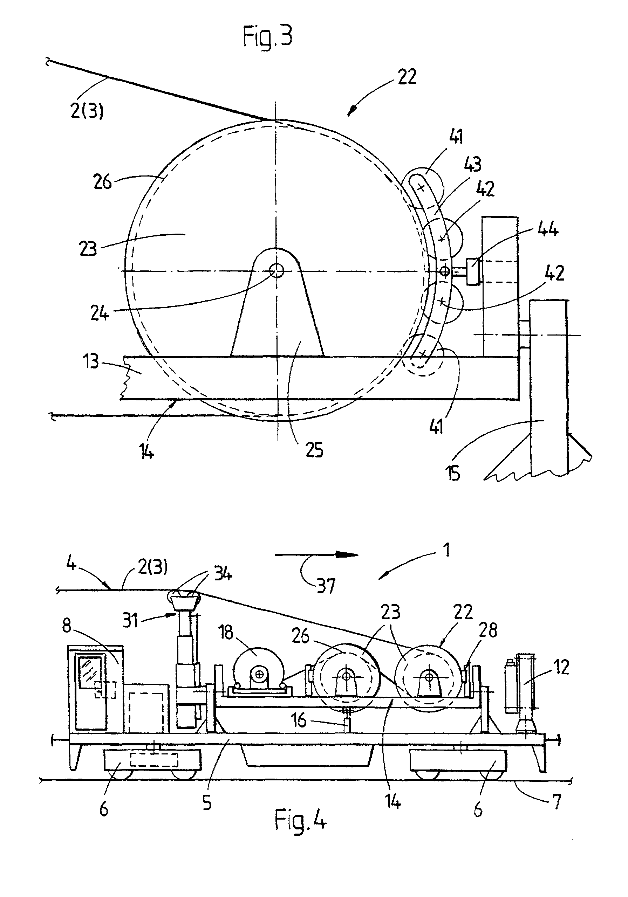

In Fig. 3 - bei der, ebenso wie in Fig. 4, funktionsgleiche Teile mit denselben Bezugszeichen wie bei Fig. 1 und 2 bezeichnet sind - ist eine Seilrolle 23 der Zugspannungsvorrichtung 22 dargestellt, die mit Druckrollen 41 zum Anpressen des Fahrdrahtes 2 bzw. Tragseiles 3 an die Seilrille 26 ausgestattet ist. Die vier Druckrollen 41 mit parallel zur Rotationsachse 24 der Seilrolle 23 ausgerichteten Drehachsen 42 sind entlang des Umfanges der Seilrolle 23 positioniert und frei drehbar in einer kreisförmig ausgebildeten Halterung 43 montiert. Diese ist ihrerseits mit dem Tragrahmen 13 bzw. der Wippe 14 über einen Antrieb 44 verbunden, der senkrecht zur Rotationsachse 24 wirksam ist. Auf diese Weise sind die Druckrollen 41 an die Seilrolle 23 anpreßbar und dienen dazu, den Reibwert zwischen dem Fahrdraht 2 bzw. Tragseil 3 und der Seilrille 26 zu vergrößern, wenn - beispielsweise aufgrund feuchter Witterungsverhältnisse oder durch Verschmutzung - der Draht in der Seilrille zum Durchrutschen neigt und die erforderliche Zugspannung nicht aufzubringen ist. Die Anpreßkraft der Druckrollen 41 kann durch Steuerung des Antriebes 44 über die Steuereinrichtung 40 in Zusammenarbeit mit der Zugkraftmeßeinrichtung 39 den Erfordernissen entsprechend variiert werden. Es wäre auch möglich, die Druckrollen 41 zum Aufbau einer Zugspannung hydraulisch abzubremsen.

Die in Fig. 4 gezeigte Variante der Maschine 1 unterscheidet sich von der Maschine gemäß Fig. 1 und 2 durch die Anordnung der Speichertrommel 18 und Seilrollen 23 zueinander. Letztere sind in Maschinenlängsrichtung unmittelbar hintereinander angeordnet, während die Speichertrommel 18 in Arbeitsrichtung nachfolgend auf der Wippe 14 befestigt ist. Diese Anordnung erleichtert das Einfädeln des Fahrdrahtes 2 bzw. Tragseiles 3 zu Arbeitsbeginn, da der von der Speichertrommel 18 kommende Draht über die erste Seilrolle 23 lediglich von oben in die Seilrille 26 eingelegt werden muß. Die erforderliche Zugspannung kann auch bei dieser Anordnung problemlos aufgebracht werden.

Es gibt bekanntlich Oberleitungssysteme, bei denen zwei Fahrdrähte parallel zueinander verlaufend angeordnet sind. In diesem Fall kann man natürlich zweckmäßigerweise zwei Seilrollen in Maschinenquerrichtung unmittelbar nebeneinander positionieren, so daß unter Bildung zweier Abwickelebenen beide Fahrdrähte gleichzeitig von zwei Speichertrommeln abgewickelt werden können.

## Patentansprüche

1. Gleisverfahrbare Maschine (1) zum Verlegen eines Fahrdrahtes (2) und/oder eines Tragseiles (3) einer Oberleitung (4) eines Gleises (7), mit einem auf Schienenfahrwerken (6) abgestützten Maschinenrahmen (5), einer Fahrdraht (2) bzw. Tragseil (3) beinhaltenden Speichertrommel (18), einer wenigstens eine - um eine Rotationsachse (24) drehbar gelagerte - Seilrolle (23) mit einer Seilrille (26) zur Abwicklung und Aufbringung einer Zugspannung aufweisenden Zugspannungsvorrichtung (22), und mit einer eine Umlenkrolle (34) mit einer Seilrille (35) aufweisenden, durch Antriebe (33,16) höhen- und seitenverstellbaren Führungseinrichtung (31), **dadurch gekenn zeichnet,** daß die oder jede Seilrolle (23) der Zugspannungsvorrichtung (22) eine einzige kreisförmige Seilrille (26) aufweist, und daß beim Abwickelvorgang sämtliche Seilrillen (26,35) der Zugspannungsvorrichtung (22) und der Führungseinrichtung (31) in einer gemeinsamen, senkrecht zur Rotationsachse (24) verlaufenden Abwickelebene (38) positioniert sind.

2. Maschine nach Anspruch 1, **dadurch gekennzeichnet, daß** die Zugspannungsvorrichtung (22) zwei in Maschinenlängsrichtung voneinander distanzierte Seilrollen (23) aufweist und die um eine Achse (19) drehbare Speichertrommel (18) zwischen den beiden Seilrollen (23) angeordnet ist, wobei deren Rotationsachsen (24) parallel zur Achse (19) der Speichertrommel (18) verlaufen.

3. Maschine nach Anspruch 1 oder 2, **dadurch gekennzeichnet, daß** die in vertikaler Richtung teleskopisch längenveränderbare Führungseinrichtung (31) in Arbeitsrichtung der Maschine (1) unmittelbar an die zweite Seilrolle (23) der Zugspannungsvorrichtung (22) anschließend angeordnet ist.

4. Maschine nach einem der Ansprüche 1, 2 oder 3, **dadurch gekennzeichnet, daß** die durch einen Antrieb (20) in Richtung der Achse (19) verschiebbar gelagerte Speichertrommel (18) und die Zugspannungsvorrichtung (22) auf einer Wippe (14) befestigt sind, die durch einen Antrieb (16) um eine in Maschinenlängsrichtung und horizontal verlaufende Schwenkachse (17) verschwenkbar am Maschinenrahmen (5) gelagert ist.

5. Maschine nach Anspruch 3 oder 4, **dadurch gekennzeichnet, daß** die Führungseinrichtung (31) auf der Wippe (14) befestigt ist.

6. Maschine nach einem der Ansprüche 1 bis 5, **dadurch gekennzeichnet, daß** die Schwenkachse (17) der Wippe (14) in der Abwickelebene (38) verlaufend angeordnet ist.

7. Maschine nach einem der Ansprüche 1 bis 6, **dadurch gekennzeichnet, daß** jeder Seilrolle (23) der Zugspannungsvorrichtung (22) ein als Bremse wirksamer Hydraulikmotor (27) zugeordnet ist.

8. Maschine nach einem der Ansprüche 1 bis 7, **dadurch gekennzeichnet, daß** jeder Seilrolle (23) der Zugspannungsvorrichtung (22) eine vorzugsweise als Scheibenbremse ausgebildete Bremseinrichtung (28) zugeordnet ist, die über eine Steuereinrichtung (40) automatisch aktivierbar ist, sobald eine Zugkräftmeßeinrichtung (39) nach einem plötzlichen Abfall der gewünschten Zugkraft für die Seilabwicklung ein entsprechendes Steuersignal an die Bremseinrichtung (28) abgibt.

9. Maschine nach einem der Ansprüche 1 bis 8, **dadurch gekennzeichnet, daß** wenigstens einer Seilrolle (23) der Zugspannungsvorrichtung (22) an deren Umfang positionierte Druckrollen (41) mit parallel zur Rotationsachse (24) ausgerichteten Drehachsen (42) zugeordnet sind, die anhand eines Antriebes (44) an die Seilrille (26) der Seilrolle (23) anpreßbar sind.

10. Maschine nach einem der Ansprüche 1 bis 9, **dadurch gekennzeichnet, daß** die Führungseinrichtung (31) zwei in Maschinenlängsrichtung hintereinander angeordnete Umlenkrollen (34) mit zueinander parallelen Drehachsen (42) aufweist.

11. Maschine nach Anspruch 10, **dadurch gekennzeichnet, daß** beide Umlenkrollen (34) mit gleich großem Durchmesser ausgebildet sind, wobei die Drehachse (42) der in Arbeitsrichtung der Maschine vorderen, der Zugspannungsvorrichtung (22) nähergelegenen Umlenkrolle (34) in vertikaler Richtung tiefer als die Drehachse (42) der anderen Umlenkrolle (34) angeordnet ist.

## Claims

1. A machine (1), mobile on a track, for installing a contact wire (2) and/or a supporting cable (3) of an overhead line (4) of a track (7), comprising a machine frame (5) supported on on-track undercarriages (6), a storage drum (18) containing contact wire (2) or supporting cable (3), a tensile stress device (22) having at least one cable pulley (23) - supported for rotation about an axis of rotation (24) - with a cable groove (26) for unwinding and applying a tensile stress, and a guiding device (31) vertically and transversely adjustable by means of drives (33,16) and having a deflection roller (34) with a cable groove (35), **characterized in that** the or each cable pulley (23) of the tensile stress device (22) has a single circular cable groove (26), and that, during the unwinding process, a11 the cable grooves (26,35) of the tensile stress device (22) and the guiding device (31) are positioned in a common unwinding plane (38) extending perpendicularly to the axis of rotation (24).

2. A machine according to claim 1, **characterized in that** the tensile stress device (22) comprises two cable pulleys (23) spaced from one another in the longitudinal direction of the machine, and the storage drum (18) rotatable about an axis (19) is arranged between the two cable pulleys (23), with the axes of rotation (24) of the latter extending parallel to the axis (19) of the storage drum (18).

3. A machine according to claim 1 or 2, **characterized in that** the guiding device (31), telescopically variable as to its length in a vertical direction, is arranged immediately adjacent to the second cable pulley (23) of the tensile stress device (22) in the working direction of the machine (1).

4. A machine according to one of claims 1, 2 or 3, **characterized in that** the storage drum (18), mounted for displacement in the direction of the axis (19) by means of a drive (20), and the tensile stress device (22) are fastened to a rocker (14) which is mounted on the machine frame (5) for pivoting about a pivot axis (17), extending in the longitudinal direction of the machine and horizontally, by means of a drive (16).

5. A machine according to claim 3 or 4, **characterized in that** the guiding device (31) is fastened to the rocker (14).

6. A machine according to one of claims 1 to 5, **characterized in that** the pivot axis (17) of the rocker (14) is arranged to extend in the unwinding plane (38).

7. A machine according to one of claims 1 to 6, **characterized in that** a hydraulic motor (27) acting as a brake is associated with each cable pulley 23 of the tensile stress device (22).

8. A machine according to one of claims 1 to 7, **characterized in that** associated with each cable pulley (23) of the tensile stress device (22) is a brake device (28), preferably designed as a disk brake, which may be activated automatically by means of a control device (40) as soon as a tension force measuring device (39), after a sudden drop in the desired tension force for unwinding the cable, emits a corresponding control signal to the brake device (28).

9. A machine according to one of claims 1 to 8, **characterized in that** pressure rollers (41), having axes of rotation (42) oriented parallel to the axis of rotation (24), are associated with and positioned at the circumference of at least one cable pulley (23) of the tensile stress device (22), the pressure rollers (41) being designed to be pressed against the cable groove (26) of the cable pulley (23) by means of a drive (44).

10. A machine according to one of claims 1 to 9, **characterized in that** the guiding device (31) comprises two deflection rollers (34) arranged one following the other in the longitudinal direction of the machine and having axes of rotation (42) which are parallel to one another.

11. A machine according to claim 10, **characterized in that** both deflection rollers (34) are designed having equal diameters, with the axis of rotation (42) of the front deflection roller (34), in the working direction of the machine, which is nearer to the tensile stress device (22), being arranged lower, in the vertical direction, than the axis of rotation (42) of the other deflection roller (34).

## Revendications

1. Machine de voie (1) pour l'installation d'un fil de contact (2) et/ou d'un câble porteur (3) d'une ligne caténaire (4) d'une voie (7), avec un châssis de machine (5) supporté sur des bogies ferroviaires (6), un tambour d'alimentation (18) contenant du fil de contact (2) respectivement du câble porteur (3), un dispositif de mise sous tension (22) présentant au moins une poulie à câble (23) - pouvant tourner autour d'un axe de rotation (24) - avec une gorge (26) pour le déroulement et pour l'application d'une tension de traction, et avec un dispositif de guidage (31) présentant une poulie de renvoi (34) avec une gorge (35) et réglable en hauteur et latéralement par des moyens d'entraînement (33, 16), **caractérisée en ce que** la ou chaque poulie à câble (23) du dispositif de mise sous tension (22) présente une seule gorge circulaire (26), et **en ce que**, lors de l'opération de déroulement, toutes les gorges (26, 35) du dispositif de mise sous tension (22) et du dispositif de guidage (31) sont positionnées dans un plan de déroulement commun (38) orienté perpendiculairement à l'axe de rotation (24) .

2. Machine suivant la revendication 1, **caractérisée en ce que** le dispositif de mise sous tension (22) présente deux poulies à câble (23) espacées l'une de l'autre dans la direction longitudinale de la machine et le tambour d'alimentation (18) tournant autour d'un axe (19) est disposé entre les deux poulies à câble (23), les axes de rotation (24) de celles-ci étant parallèles à l'axe (19) du tambour d'alimentation (18).

3. Machine suivant la revendication 1 ou 2, **caractérisée en ce que** le dispositif de guidage (31) de longueur variable de manière télescopique en direction verticale est disposé, dans la direction de travail de la machine (1), immédiatement à la suite de la deuxième poulie à câble (23) du dispositif de mise sous tension (22).

4. Machine suivant l'une quelconque des revendications 1, 2 ou 3, **caractérisée en ce que** le tambour d'alimentation (18) mobile dans la direction de l'axe (19) par un moyen d'entraînement (20) et le dispositif de mise sous tension (22) sont fixés sur bascule (14), qui est supportée sur le châssis de la machine (5) de façon pivotante, par un moyen d'entraînement (16), autour d'un axe de pivotement (17) orienté horizontalement et dans la direction longitudinale de la machine.

5. Machine suivant la revendication 3 ou 4, **caractérisée en ce que** le dispositif de guidage (31) est fixé sur la bascule (14).

6. Machine suivant l'une quelconque des revendications 1 à 5, **caractérisée en ce que** l'axe de pivotement (17) de la bascule (14) est disposé dans le plan de déroulement (38).

7. Machine suivant l'une quelconque des revendications 1 à 6, **caractérisée en ce qu'**un moteur hydraulique (27) agissant en frein est associé à chaque poulie à câble (23) du dispositif de mise sous tension (22).

8. Machine suivant l'une quelconque des revendications 1 à 7, **caractérisée en ce qu'**à chaque poulie à câble (23) du dispositif de mise sous tension (22) est associé un dispositif de freinage (28) de préférence sous la forme d'un frein à disque, qui peut être activé automatiquement par un dispositif de commande (40), dès qu'un dispositif de mesure de l'effort de traction (39) envoie, après une chute brutale de l'effort de traction désiré pour le déroulement du câble, un signal de commande correspondant au dispositif de freinage (28).

9. Machine suivant l'une quelconque des revendications 1 à 8, **caractérisée en ce qu'**à au moins une poulie à câble (23) du dispositif de mise sous tension (22) sont associés, sur son pourtour, des galets de pression (41) avec des axes de rotation (42) orientés parallèlement à l'axe de rotation (24), qui peuvent être appliqués sur la gorge (26) de la poulie à câble (23) à l'aide d'un moyen d'entraînement (44).

10. Machine suivant l'une quelconque des revendications 1 à 9, **caractérisée en ce que** le dispositif de guidage (31) présente deux poulies de renvoi (34), avec des axes de rotation (36) parallèles l'un à l'autre, disposées l'une derrière l'autre dans la direction longitudinale de la machine.

11. Machine suivant la revendication 10, **caractérisée en ce que** les deux poulies de renvoi (34) sont de diamètre égal, l'axe de rotation (36) de la poulie de renvoi (34) la plus proche du dispositif de mise sous tension (22) et située à l'avant dans la direction de travail de la machine, étant disposé à une plus grande profondeur en direction verticale que l'axe de rotation (36) de l'autre poulie de renvoi (34).
